# FASCICULE DE BREVET EUROPEEN

(11) **EP 0 490 729 B1**
(45) Date de publication et mention de la délivrance du brevet: **02.11.1994**
(21) Numéro de dépôt: 91403264.4
(22) Date de dépôt: 03.12.1991
(51) Int. Cl.: B01D 57/02, G01N 27/26

(54) **Procédé de préparation d'une membrane garnie d'une couche d'un gel et cadre de support d'une telle membrane conçue pour la mise en oeuvre de ce procédé**
Verfahren zur Herstellung einer mit einer Gelschicht versehenen Membran und Membran-Trägerrahmen für die Ausführung dieses Verfahrens
Process for the manufacture of a membrane provided with a gel layer and membrane supporting frame for the implementation of this process

(30) Priorité: 10.12.1990 FR 9015409
(43) Date de publication de la demande: 17.06.1992
(73) Titulaire: BERTIN & CIE, F-78373 Plaisir Cedex (FR)
(72) Inventeur: Coste, Jérôme Christian Denis, F-06200 Nice (FR); Aksas, Salah, F-75013 Paris (FR); Ginot, Frédéric, F-78000 Versailles (FR); Cohen, Daniel, F-91600 Savigny/Orge (FR)
(74) Mandataire: Colas, Jean-Pierre

(56) Documents cités:
- EP-A- 0 196 790
- EP-A- 0 309 303
- WO-A-87/02132
- DE-A- 3 032 070
- FR-A- 1 543 571
- US-A- 4 883 597

## Description

La présente invention est relative à un procédé de préparation d'une membrane garnie d'une couche d'un gel et un cadre de support d'une telle membrane, conçu pour la mise en oeuvre de ce procédé et muni d'une membrane. Plus particulièrement, l'invention est relative à la confection d'un ensemble gel/membrane utilisable dans une technique de séparation de macromolécules par électrophorèse.

Dans cette application, on utilise une couche d'un gel, tel que l'agarose ou un polyacrylamide, et un champ électrique établi entre deux bords opposés de la couche. Des échantillons de macromolécules, par exemple d'acide nucléique, à séparer sont déposés dans des puits formés dans le gel, le long d'un de ces deux bords de la couche. L'ensemble est ensuite immergé dans un liquide approprié d'électrophorèse. Sous l'effet du champ électrique, les macromolécules des échantillons logés dans les puits se déplacent vers le bord opposé de la couche, à travers le gel, à des vitesses qui sont fonction notamment de leur masse moléculaire, de sorte qu'au bout d'un temps donné, des macromolécules de masses moléculaires différentes ont parcouru dans le gel des distances différentes.

Les macromolécules ainsi séparées sont ensuite transférées, soit par entraînement fluide, soit au moyen d'un champ électrique perpendiculaire à la couche de gel, sur une membrane placée contre une face de cette couche, en vue de leur hybridation et de leur détection ultérieures. On décrit dans la demande de brevet européen No. 358 556 déposée au nom de la demanderesse, un procédé et un dispositif d'électrophorèse conçus pour assurer une telle migration contrôlée de macromolécules, dans une pile de plaques rectangulaires de gel.

Lorsqu'on utilise une membrane pour supporter la couche de gel, la confection de l'ensemble gel/membrane est particulièrement délicate en raison de la finesse et du manque de raideur de la membrane utilisée, couramment une feuille mince de nitrocellulose éventuellement chargée de nylon pour accroître sa résistance mécanique.

On connaît des documents de brevet WO-A-87 02 132, EP-A-0 196 790 et DE-A-30 32 070, des procédés de préparation de tels ensembles gel/membrane qui consistent à couler un gel sur une membrane à plat, la couche de gel étant délimitée par une sorte de cadre.

Les cadres connus pour supporter une telle membrane ont pour défaut de ne pas permettre un maintien de cette membrane dans un plan sous tension uniforme. Des plis résultant de défauts de tension se forment alors dans la membrane. La couche de gel que l'on coule sur une membrane ainsi plissée présente des déformations qui s'opposent à une progression régulière des macromolécules dans la couche et rendent le résultat de la migration inexploitable. La suppression de ces plis exige des manipulations longues et fastidieuses incompatibles avec les exigences d'une fabrication automatisée voire industrielle.

Dans le document EP-A-0 196 790 précité, on décrit un disque de gel épais délimité par un anneau périphérique et par deux filtres tendus sur les bases de l'anneau. Une migration de molécules est organisée perpendiculairement à la surface du disque. On ne rencontre donc pas le problème de la perturbation par des plis de la progression des molécules, tel qu'on le rencontre dans l'utilisation d'ensembles gel/membrane évoquée plus haut.

La présente invention a donc pour but de fournir un procédé de préparation d'une telle membrane garnie de gel et un cadre, muni d'une membrane, pour la mise en oeuvre de ce procédé, qui permettent d'empêcher la formation de plis dans la membrane.

La présente invention a aussi pour but de fournir un tel procédé et un tel cadre qui soient compatibles avec des moyens industriels de confection des membranes garnies de gel et de manipulation des cadres de support de ces membranes.

On atteint ces buts de l'invention, ainsi que d'autres qui apparaîtront à la lecture de la présente description, avec un procédé de préparation d'une membrane garnie d'une couche d'un gel, suivant lequel on met d'abord la membrane à plat dans un plan horizontal et on coule ensuite un gel sur cette membrane avec mise sous tension de celle-ci, ce procédé étant remarquable en ce que, pour mettre la membrane sous tension, on fixe d'abord continûment deux bords sensiblement parallèles opposés de celle-ci tout au long de barrettes et on écarte ensuite ces barrettes l'une de l'autre, dans une direction transversale à leur direction.

Grâce à cette mise sous tension de la membrane, les plis sont supprimés et le gel s'étale en une couche d'épaisseur uniforme sur la membrane.

Pour la mise en oeuvre de ce procédé, l'invention fournit un cadre de support, qui comprend au moins deux barrettes parallèles et qui est muni d'une membrane fixée continüment auxdites barrettes par des moyens suivant deux bords parallèles de cette membrane. Le cadre est remarquable en ce qu'il comprend des moyens pour faire varier progressivement la position relative des deux barrettes entre une position où la membrane est détendue et une position où cette membrane est tendue entre ses deux barrettes.

Les moyens pour faire varier la position relative des barrettes comprennent au moins deux lames élastiques identiques ancrée chacune par ses extrémités dans deux extrémités correspondantes des barrettes fixées à la membrane, ces lames pouvant être fléchies pour rapprocher les barrettes l'une de l'autre en vue de la fixation de la membrane aux barrettes. Les lames sont prévues pour coopérer avec des moyens de commande de leur flexion.

Suivant un mode de réalisation préféré du cadre selon l'invention, celui-ci comprend deux paires de lames élastiques parallèles ancrées chacune entre deux extrémités correspondantes des barrettes et des moyens de commande de la flexion des lames de chaque paire pour les rapprocher ou les écarter symétriquement. Ces moyens peuvent avantageusement être constitués par une came rotative insérée entre les deux lames d'une paire.

D'autres caractéristiques et avantages du procédé et du cadre suivant la présente invention apparaîtront à la lecture de la description qui va suivre et à l'examen du dessin annexé dans lequel :
- la figure 1 est une vue perspective du cadre suivant l'invention, dans la configuration qui lui est donnée pour le préparer a la coulée d'une couche de gel sur la membrane fixée sur ce cadre,
- la figure 2 est une vue perspective du même cadre, dans la configuration qui est la sienne après la mise sous tension de la membrane qu'il porte, conformément aux enseignements de la présente invention,
- la figure 3 est une vue partielle en coupe du cadre des figures 1 et 2 prises suivant le trait de coupe III-III de la figure 2, et
- la figure 4 est une vue en coupe analogue à celle de la figure 3 d'un autre mode de réalisation du cadre suivant la présente invention.

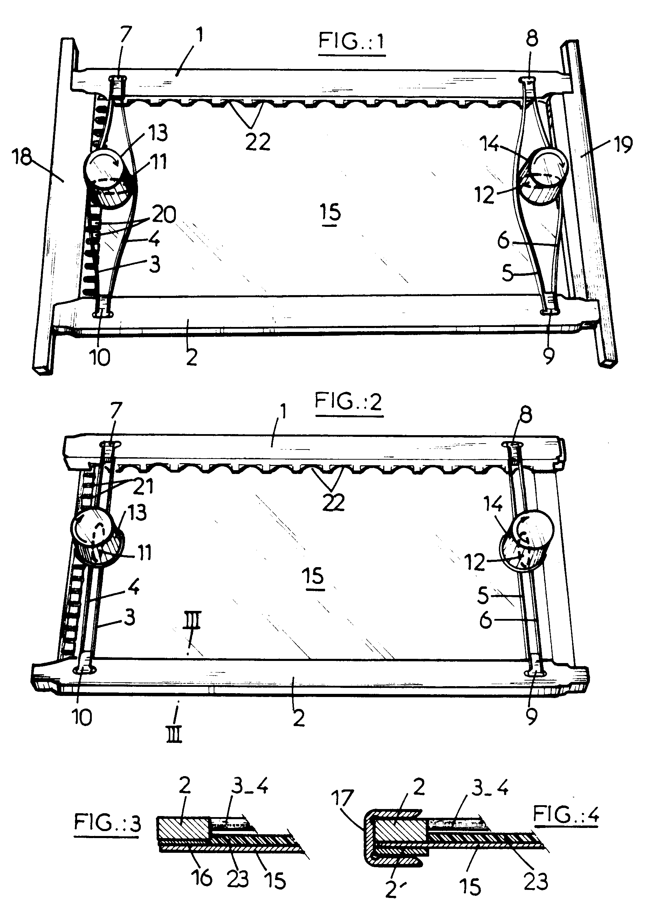

Comme représenté aux figures 1 et 2 du dessin annexé, le cadre de support selon l'invention comprend deux barrettes symétriques 1 et 2 entretoisées par des paires de lames élastiques 3, 4 et 5, 6. Ces lames sont de mêmes longueurs et ancrées perpendiculairement en 7, 8, 9, 10 dans des extrémités correspondantes des deux barrettes 1 et 2, de manière à définir avec ces barrettes un cadre rectangulaire sur deux bords opposés duquel elles sont agencées par paire de lames parallèles légèrement écartées l'une de l'autre.

Ces lames sont constituées en un matériau ni métallique ni conducteur, flexible mais non extensible tel qu'un matériau composite, par exemple en verre époxy pultrudé. Ainsi, si on déforme ces lames comme illustré à la figure 1, la longueur de la projection de la lame sur un axe perpendiculaire aux deux barrettes 1, 2 diminue ce qui a pour effet de rapprocher les barrettes l'une de l'autre. Si les déformations appliquées aux quatre barrettes sont identiques, les barrettes restent en outre parallèles à elles-mêmes.

Suivant l'invention, on utilise cette structure mécanique pour tendre une membrane qui doit recevoir une couche d'un gel. Pour ce faire, on fixe un morceau rectangulaire de cette membrane sous le cadre des figures 1 et 2, alors que des moyens de commande 11, 12 de la flexion des lames sont insérés entre les lames 3, 4 et 5, 6 respectivement. Ces moyens 11, 12 peuvent, par exemple, prendre la forme de coins ou, comme représenté à la figure 1, de cames oblongues solidaires de parties cylindriques moletées 13, 14 respectivement, permettant de les faire tourner commodément entre une position où la came ne charge pas les lames (figure 2) et une position où elle charge ces lames en les déformant (figure 1) de manière à rapprocher les barrettes 1, 2 l'une de l'autre, en parallèle.

Suivant l'invention, on fixe une membrane 15 par deux bords opposés aux barrettes 1 et 2 alors que le cadre est dans la position représentée à la figure 1. Le moyen de fixation utilisé peut être un produit adhésif tel qu'un ruban adhésif double face 16 (voir la coupe partielle de la figure 3) préalablement rapporté sur la membrane avec protection temporaire. En variante, les deux bords de la membrane 15 peuvent être pincés entre une barrette 1, 2 et une contre-barrette 1′, 2′ (voir la coupe partielle de la figure 4), un profilé de clipage en U 17 étant passé sur l'ensemble pour presser ces deux éléments l'un vers l'autre.

Après la fixation d'une membrane 15 sur le cadre (1, 2, 3, 4, 5, 6) le procédé de préparation d'une membrane garnie d'une couche de gel suivant l'invention se développe de la manière suivante.

Le cadre portant la membrane détendue est posé sur un support parfaitement plat et horizontal contre lequel la membrane s'applique. L'horizontalité est vérifiée avec un niveau d'eau. Des barrettes supplémentaires 18, 19 sont montées sur le cadre au voisinage des lames élastiques, de manière à délimiter sur la membrane sous-jacente, avec les barrettes 1, 2, une surface qui doit recevoir une couche de gel.

On remarquera que l'une 18 des barrettes 18, 19 présente, en regard de la surface délimitée, une surface portant de multiples indentations alignées 20 formant un peigne.

On coule ensuite une quantité prédéterminée d'un gel liquide, mais faisant prise progressivement à la température ambiante, par exemple, sur la membrane 15, à l'intérieur du cadre suivant l'invention. Ce gel s'étale alors par gravité sur la membrane en une couche 23 d'épaisseur parfaitement uniforme (voir figures 3 et 4).

Pour éviter, conformément à un objectif essentiel de l'invention, la présence de plis sur la membrane, celle-ci peut être tendue juste avant la coulée du gel, par une rotation des cames 11, 12 propre à détendre les lames élastiques 3, 4, 5, 6 (voir figure 2) et donc à écarter les barrettes 1, 2 l'une de l'autre contre la résistance de la membrane 15 ainsi mise en tension.

On remarquera que lors de la coulée du gel, celui-ci s'insinue entre les indentations 20 de la barrette 18 ce qui a pour effet de former une rangée de puits 21 sur un bord de la couche, puits destinés à recevoir des échantillons de macromolécules à étudier, comme indiqué en préambule de la présente description, lorsque l'application visée est la migration contrôlée de ces macromolécules par électrophorèse.

Les barrettes 18, 19 sont amovibles et retirées du cadre après la prise du gel (voir figure 2). Le cadre ainsi dépouillé porte une couche de gel dont les puits 21 sont alors dégagés et prêts à recevoir les macromolécules à étudier.

On remarquera que les barrettes 1, 2 portent, sur leur surface latérale intérieure au cadre, des rangées de dents arrondies 22. Il s'agit là d'une disposition qui contribue à l'accrochage de la couche de gel sur les barrettes pendant la prise de celui-ci. On remarquera en outre sur les figures 3 et 4 que les bords de la couche ou plaque de gel restent au contact des faces internes des barrettes 1 et 2.

Le cadre ainsi garni d'une membrane portant une couche d'un gel approprié et d'épaisseur calibrée peut ensuite être introduit, après remplissage des puits 21, dans un dispositif tel que celui décrit à la demande de brevet européen précitée et conçu pour recevoir une pluralité de tels cadres et assurer simultanément dans ceux-ci les migrations électrophorétiques nécessaires.

Il apparaît maintenant que le procédé suivant l'invention apporte bien l'avantage essentiel annoncé, à savoir la possibilité de préparer une couche de gel, de quelques millimètres d'épaisseur par exemple, sur une membrane parfaitement tendue, sans pli.

Il apparaît aussi immédiatement à l'homme de métier, que les diverses opérations de fixation de la membrane sur son cadre de support, de coulée du gel et de mise sous tension de la membrane sont automatisables sans difficultés particulières et se prêtent donc à une industrialisation de la fabrication de tels ensembles de gel/membrane. Il s'agit là d'un avantage important de l'invention sur les techniques actuelles de préparation de tels ensembles qui exigent à la fois du temps et de l'habileté sans que l'écueil de la formation de plis puisse toujours être évité. En outre, dans le cadre d'une fabrication industrielle, il devient possible de contrôler la tension de la membrane ce qui contribue à la reproductibilité des spectres de migration de macromolécules transférés sur la membrane.

On observera en outre que la membrane peut être détachée du cadre suivant l'invention, que cette membrane soit fixée à ce cadre par les moyens illustrés à la figure 3 ou à la figure 4. Le cadre est alors réutilisable ce qui abaisse encore le coût du procédé de préparation suivant l'invention, notamment dans le cadre d'une industrialisation de ce procédé.

Bien entendu l'invention n'est pas limitée au mode de réalisation décrit et représenté qui n'a été donné qu'à titre d'exemple. Ainsi, le cadre décrit est entretoisé par deux paires de lames élastiques 3, 4 et 5, 6. On pourrait concevoir un cadre comprenant une seule lame élastique là où il y en a deux dans le mode de réalisation décrit. Cependant, l'utilisation de paires de lames écartées, parallèles et encastrées est avantageuse en ce que chaque paire constitue elle-même un rectangle qui se déforme facilement symétriquement et qui est difficilement déformable asymétriquement, qui s'oppose à toute déformation du cadre dans son plan et qui s'oppose en outre à tout voilage de ce cadre grâce au fait que les lames sont disposées dans des plans perpendiculaires au plan du cadre.

On observera aussi que les moyens utilisés suivant l'invention pour tendre une membrane entre deux de ses bords pourraient être duplicatés entre les deux autres bords pour assurer une mise en tension bidirectionnelle de la membrane, plus propre encore, en principe, à favoriser la parfaite planeité de la membrane. On pourrait encore tendre la membrane dans une direction parallèle à la direction de migration des macromolécules plutôt que dans une direction perpendiculaire à celle-ci.

## Revendications

1. Procédé de préparation d'une membrane (15) garnie d'une couche d'un gel (23), suivant lequel on met d'abord la membrane à plat dans un plan horizontal et on coule ensuite un gel sur cette membrane avec une mise sous tension de celle-ci, caractérisé en ce que, pour mettre la membrane sous tension, on fixe d'abord continûment deux bords sensiblement parallèles opposés de cette membrane tout au long de barrettes (1, 2) et on écarte ensuite ces barrettes l'une de l'autre, dans une direction transversale à leur direction.

2. Procédé conforme à la revendication 1, caractérisé en ce que l'on coule la couche de gel sur la membrane horizontale alors que les barrettes (1,2) sont en position rapprochée.

3. Procédé conforme à la revendication 2, caractérisé en ce qu'on délimite une surface sensiblement rectangulaire sur la membrane non tendue à l'aide desdites barrettes (1, 2) et de deux autres barrettes transversales (18, 19) et on coule le gel sur la surface ainsi délimitée.

4. Procédé conforme à l'une quelconque des revendications 1, 2 et 3, caractérisé en ce qu'on fixe la membrane sur les barrettes (1, 2) de support par un ruban adhésif (16) double face.

5. Cadre de support conçu pour la mise en oeuvre du procédé conforme à la revendication 1 comprenant au moins deux barrettes (1, 2) parallèles et étant muni d'une membrane (15) fixée continûment auxdites barrettes par des moyens (2', 17 ; 16), suivant deux bords parallèles de cette membrane, caractérisé en ce qu'il comprend des moyens (3, 4, 5, 6, 11, 12) pour faire varier la position relative des deux barrettes entre une position où la membrane (15) est détendue et une position où cette membrane (15) est tendue entre ces barrettes.

6. Cadre conforme à la revendication 5, caractérisé en ce que lesdits moyens pour faire varier la position relative desdites barrettes comprennent au moins deux lames élastiques identiques (3, 4, 5, 6) ancrées chacune par ses extrémités dans deux extrémités correspondantes des barrettes (1, 2) fixées à la membrane (15), ces lames pouvant être fléchies pour rapprocher les barrettes l'une de l'autre en vue de la fixation de la membrane aux barrettes.

7. Cadre conforme à la revendication 6, caractérisé en ce qu'il est conçu pour coopérer avec des moyens de commande (11, 12) de la flexion des lames élastiques.

8. Cadre conforme à la revendication 7, caractérisé en ce qu'il comprend deux paires de lames élastiques parallèles (3, 4) et (5, 6) ancrées chacune entre deux extrémités correspondantes des barrettes, les moyens de commande (11, 12) de la flexion des lames de chaque paire étant constitués par une came rotative insérée entre deux lames d'une paire.

9. Cadre conforme à l'une quelconque des revendications 5 à 8, caractérisé en ce qu'il comprend en plus deux barrettes supplémentaires (18, 19) dimensionnées pour être installées entre les deux barrettes de support de la membrane de manière à délimiter avec celles-ci, sur la membrane, une surface sur laquelle le gel à couler sur la membrane doit être retenu jusqu'à sa prise.

10. Cadre conforme à la revendication 9, caractérisé en ce qu'une au moins (18) des barrettes supplémentaires est amovible et présente des indentations (20) permettant de ménager des puits (21) sur un bord de la surface de la membrane réservée à la coulée du gel.

11. Cadre conforme à l'une quelconque des revendications 9 et 10, caractérisé en ce que les barrettes (1, 2) de support de la membrane (15) sont munies de dents (22) sur leurs surfaces destinées à contenir le gel sur la surface de la membrane réservée à ce gel.

12. Cadre conforme à l'une quelconque des revendications 5 à 11, caractérisé en ce qu'il comprend également des contre-barrettes (2') aptes à fixer la membrane par pincement entre une surface des barrettes et une surface des contre-barrettes (2'), le pincement étant assuré par un profilé (17) enserrant la barrette et la contre-barrette associées.

## Claims

1. A method for preparing a membrane (15) lined with a layer of a gel (23), in which the membrane is firstly laid flat in a horizontal plane and a gel is then cast onto this membrane, with the latter being put under tension, characterized in that, to put the membrane under tension, two substantially parallel edges of the latter are continuously attached to bars (1,2) and then these bars are moved away from each other, in a direction transverse to their direction.

2. The method as claimed in claim 1, characterized in that the gel layer is cast onto the horizontal membrane while the bars (1,2) are in the closer-together position.

3. The method as claimed in claim 2, characterized in that a substantially rectangular surface is delimited on the non-stretched membrane with the aid of said bars (1, 2) and of two other transverse bars (18,19) and the gel is cast onto the surface thus delimited.

4. The method as claimed in claims 1, 2 or 3, characterized in that the membrane is attached to the support bars (1,2) by a double-sided adhesive tape (16).

5. A frame for embodying the method according to claim 1, comprising at least two parallel bars (1,2) and a membrane (15) attached to these bars by means (2',17;16), along two parallel edges of this membrane, characterized by means (3,4,5,6,11,12) for causing the relative position of the two bars to vary between a position where the membrane (15) is unstretched and a position where this membrane (15) is stretched between these bars.

6. The frame as claimed in claim 5, characterized in that said means of causing the relative position of said bars to vary comprise at least two identical elastic strips (3,4,5,6) each secured by its ends in two corresponding ends of the bars (1,2) which are attached to the membrane (15), it being possible for these strips to be flexed in order to move the bars closer to each other with a view to attaching the membrane to the bars.

7. The frame as claimed in claim 6, characterized in that it is designed to interact with means (11,12) of controlling the flexure of the elastic strips.

8. The frame as claimed in claim 7, comprising two pairs of parallel elastic strips (3,4) and (5,6) each secured between two corresponding ends of the bars, the means (11,12) of controlling the flexure of the strips of each pair being constituted by a rotary cam inserted between two strips of one pair.

9. The frame as claimed in anyone of claims 5 to 8, characterized by two additional bars (18,19) sized in order to be installed between the two bars supporting the membrane so as to delimit with these membrane-supporting bars, on the membrane, a surface over which the gel to be cast onto the membrane has to be retained until it sets.

10. The frame as claimed in claim 9, characterized in that at least one (18) of the additional bars is detachable and has indentations (20) enabling wells (21) to be disposed on one edge of the surface of the membrane reserved for the casting of the gel.

11. The frame as claimed in anyone of claims 9 and 10, characterized in that the bars (1,2) supporting the membrane (15) are fitted with teeth (22) on their surfaces intended to contain the gel on the surface of the membrane reserved for this gel.

12. The frame as claimed in anyone of claims 5 to 11, characterized in that it also comprises counter-bars (2') for attaching the membrane by clamping between one surface of these bars and one surface of the counter-bars (2'), the clamping being ensured by a profile (17) gripping the bar and the associated counter-bar.

## Patentansprüche

1. Verfahren zur Herstellung einer mit einer Gelschicht (23) versehenen Membran (15), bei dem man zuerst die Membran in einer Horizontalebene flach ausbreitet und danach ein Gel auf die Membran gießt, wobei man die Membran unter Spannung setzt, dadurch gekennzeichnet, daß man, um die Membran unter Spannung zu setzen, zuerst zwei im wesentlichen parallele gegenüberliegende Ränder der Membran durchlaufend entlang Schienen (1, 2) fixiert und danach die Schienen relativ zueinander in einer Richtung quer zu ihrer Richtung auseinanderbewegt.

2. Verfahren nach Anspruch 1, dadurch gekennzeichnet, daß man die Gelschicht auf die horizontale Membran gießt, während sich die Schienen (1, 2) in benachbarter Position befinden.

3. Verfahren nach Anspruch 2, dadurch gekennzeichnet, daß man eine im wesentlichen rechteckige Fläche auf der nichtgespannten Membran mit Hilfe der Schienen (1, 2) und mit Hilfe von zwei anderen Querschienen (18, 19) begrenzt und daß man das Gel auf die auf diese Weise begrenzte Fläche gießt.

4. Verfahren nach einem der Ansprüche 1, 2 und 3, dadurch gekennzeichnet, daß man die Membran an den Lagerschienen (1, 2) mit Hilfe eines doppelseitigen Klebebandes (16) fixiert.

5. Trägerrahmen zur Durchführung des Verfahrens nach Anspruch 1 mit mindestens zwei parallelen und mit einer Membran (15) versehenen Schienen (1, 2), wobei die Membran mit Hilfe von Einrichtungen (2', 17; 16) entlang zwei parallelen Rändern der Membran an den Schienen fixiert ist, dadurch gekennzeichnet, daß er Einrichtungen (3, 4, 5, 6, 11, 12) zum Vorändern der Relativlage der beiden Schienen zwischen einer Position, in der die Membran (15) entspannt ist, und einer Position, in der die Membran (15) zwischen den Schienen gespannt ist, aufweist.

6. Trägerrahmen nach Anspruch 5, dadurch gekennzeichnet, daß die Einrichtungen zum Verändern der Relativlage der Schienen mindestens zwei identische elastische Streifen (3, 4, 5, 6) umfassen, die jeweils über ihre Enden in zwei den an der Membran (15) befestigten Schienen (1, 2) entsprechenden Enden verankert sind und die zur Annäherung der Schienen relativ zueinander im Hinblick auf die Befestigung der Membran an den Schienen durchgebogen werden können.

7. Trägerrahmen nach Anspruch 6, dadurch gekennzeichnet, daß er mit Steuereinrichtungen (11, 12) für die Durchbiegung der elastischen Streifen zusammenwirkt.

8. Trägerrahmen nach Anspruch 7, dadurch gekennzeichnet, daß er zwei Paare von parallelen elastischen Streifen (3, 4) und (5, 6) umfaßt, die jeweils zwischen zwei den Schienen entsprechenden Enden verankert sind, und daß die Steuereinrichtungen (11, 12) für die Durchbiegung der Streifen eines jeden Paares durch einen Nocken gebildet sind, der zwischen zwei Streifen eines Paares drehbar eingesetzt ist.

9. Trägerrahmen nach einem der Ansprüche 5 bis 8, dadurch gekennzeichnet, daß er des weiteren zwei zusätzliche Schienen (18, 19) aufweist, die so dimensioniert sind, daß sie derart zwischen die beiden Lagerschienen der Membran installierbar sind, daß sie zusammen mit diesen auf der Membran eine Fläche begrenzen, auf der das auf die Membran zu gießende Gel bis zu seiner Verfestigung zurückgehalten werden soll.

10. Trägerrahmen nach Anspruch 9, dadurch gekennzeichnet, daß mindestens eine (18) der zusätzlichen Schienen bewegbar ist und Auszahnungen (20) aufweist, die die Anordnung Von Löchern (21) an einem Rand der Fläche der Membran ermöglichen, welche für das Gießen des Gels reserviert sind.

11. Trägerrahmen nach einem der Ansprüche 9 und 10, dadurch gekennzeichnet, daß die Lagerschienen (1, 2) für die Membran (15) auf ihren zum Einschließen des Gels auf der für das Gel reservierten Fläche der Membran bestimmten Flächen mit Zähnen (22) versehen sind.

12. Trägerrahmen nach einem dar Ansprüche 5 bis 11, dadurch gekennzeichnet, daß er ebenfalls Gegenschienen (2') aufweist, mit denen die Membran durch Quetschung zwischen einer Fläche der Schienen und einer Fläche der Gegenschienen (2') fixiert werden kann, wobei die Quetschung durch ein Profil (17) sichergestellt wird, das die Schiene und die zugehörige Gegenschiene umgreift.
